Europäisches Patentamt

European Patent Office

Office européen des brevets

(11) Publication number: **0 111 052**
**B1**

(12) **EUROPEAN PATENT SPECIFICATION**

(45) Date of publication of patent specification: **02.11.89**

(21) Application number: **83108159.1**

(22) Date of filing: **18.08.83**

(51) Int. Cl.⁴: **H 01 M 8/14,** H 01 M 4/88

(54) Fuel cell electrode structure and method of making it.

(30) Priority: **19.08.82 US 409518**

(43) Date of publication of application:
**20.06.84 Bulletin 84/25**

(45) Publication of the grant of the patent:
**02.11.89 Bulletin 89/44**

(84) Designated Contracting States:
**DE FR GB IT**

(56) References cited:
**DE-A-2 945 565**
**FR-A-1 352 040**
**US-A-3 042 551**
**US-A-3 779 812**

(73) Proprietor: **Energy Research Corporation**
**3 Great Pasture Road**
**Danbury Connecticut 06810 (US)**

(72) Inventor: **Patel, Pinakin S.**
**122 Hammersmith Apartments Padanaram Road**
**Danbury Connecticut 06810 (US)**
Inventor: **Paetsch, Lawrence M.**
**Rural Route 1 Box 323**
**Sherman Connecticut 06784 (US)**

(74) Representative: **Abitz, Walter, Dr.-Ing. et al**
**Abitz, Morf, Gritschneder, Freiherr von**
**Wittgenstein Postfach 86 01 09**
**D-8000 München 86 (DE)**

EP 0 111 052 B1

Courier Press, Leamington Spa, England.

# EP 0 111 052 B1

## Description

### Background of the invention

This invention pertains to electrodes and, in particular, to electrodes for use with molten carbonate fuel cells.

In the design of electrodes for molten carbonate fuel cells, it is essential that the electrodes be provided with carbonate constituent to provide the needed bridge with the carbonate electrolyte tile. In present structures, one technique for providing the needed carbonate constituent is to fill the electrolyte tile with excess carbonate and allow some of the excess to drain into the electrodes. The electrolyte becomes depleted in the tile and electrodes during the course of fuel cell operation and limits the useful life of the fuel cell.

A storage of excess carbonate electrolyte can be provided in the electrolyte tile by increasing its thickness. However, increasing the tile thickness decreases the fuel cell output and, thus, is undesirable.

To avoid having to increase the tile thickness, other practices have been used in which carbonate electrolyte is supplied directly to the electrodes. While this requires increased electrode thickness, such increased thickness is not detrimental to cell performance. Present techniques for adding carbonate electrolyte to the electrodes, however, are inefficient and could have an adverse effect on the electrode characteristics.

In particular, carbonate electrolyte is usually added by melting the electrolyte directly into the electrode at high temperatures (e.g., 600°C. When this is carried out using gases that the fuel electrode would normally be subjected to during fuel cell operation, wetting of the electrode is poor and inhibits electrolyte absorption. Thus, in this case, the high temperatures used can adversely affect the electrode characteristics and the degree of added electrolyte is not substantial. Moreover, while the amount of electrolyte can be increased by using a different gas during the heating, the change in gas composition can also adversely affect the electrode characteristics.

It is therefore an object of the present invention to provide a practice for incorporating carbonate electrolyte into an electrode which does not suffer from the above disadvantages.

It is a further object of the present invention to provide an improved electrode for molten carbonate fuel cells.

### Summary of the invention

In accordance with the principles of the present invention, the above and other objectives are realized in an electrode provided with an alkali and or alkaline earth hydroxide constituent. Such constituent is added to the electrode at room temperature and the electrode is subsequently heat treated in a carbon dioxide environment either in or out of cell to convert the hydroxide constituent to a carbonate. The resultant electrode thereby includes the desired carbonate electrolyte in an amount which can be readily controlled and selected by the initial selection and introduction of the hydroxide constituent at room temperature.

In a further aspect of the present invention, a ceramic oxide constituent is also included in the electrode. This constituent also reacts with the hydroxide constituent during heating to provide a stable component which affords sintering resistance and greater carbonate retaining capability.

### Brief description of the drawings

The above and other features and aspects of the present invention will become more apparent upon reading the following detailed description in conjunction with the accompanying drawings, in which:—

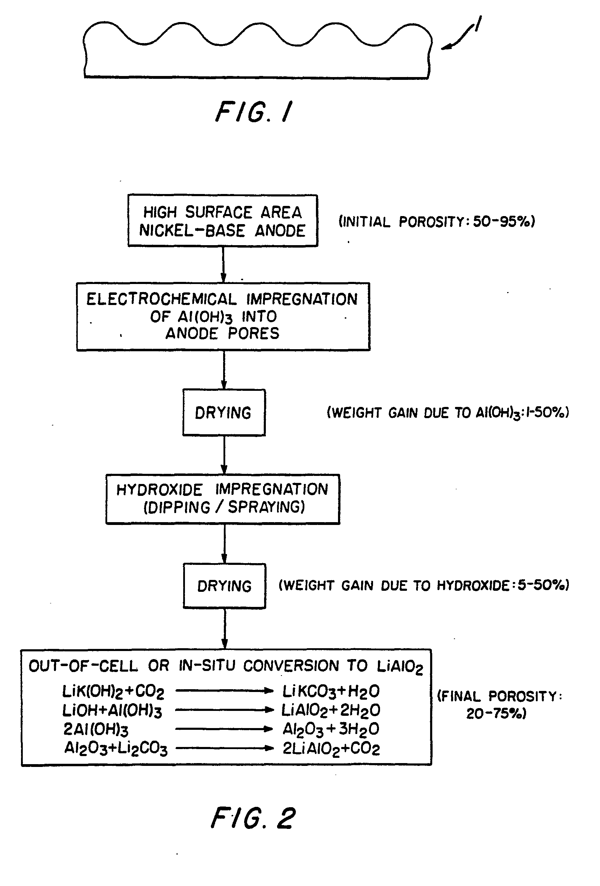

Figure 1 shows an electrode in accordance with the principles of the present invention; and Figure 2 illustrates a flow diagram for fabricating electrodes in accordance with the invention.

### Detailed description

In Figure 1, an electrode in accordance with the principles of the invention is shown. The electrode is to be used in a fuel cell employing a carbonate electrolyte tile. The cation of the tile may be any alkaline constituent, such as, for example, Li, K, Na, etc. The electrode 1 comprises a base metallic structure preferably formed of a nickel or a nickel alloy such as, for example, Ni-Co, Ni-Cr, Ni and other metals, etc.

In accordance with the invention, the electrode 1 is additionally filled or impregnated with an alkali and/or alkaline earth hydroxide having a preselected cation component similar to the cation of the carbonate tile with which the electrode is to be used. This impregnation is carried out at room temperature by a conventional technique, such as, for example, dipping, spraying or vacuum filtration, using a solution of desired hydroxide. Depending upon the particular process used and type of electrode, a suitable organic or inorganic solvent may be used to form the hydroxide solution. Preferable, solvents are water, methanol, ethanol and isopropanol.

The amount of hydroxide impregnated should be such as to provide the needed contact and bridge between the electrode and the electrolyte tile during fuel cell operation and, moreover, should be such as to provide an inventory for replenishing electrolyte depleted during operation. Preferably the amount of impregnated hydroxide should be such as to result in electrolyte in the electrode which fills from 5 to 85 percent of the electrode pore volume.

Subsequent to impregnating the electrode with the desired hydroxide constituent, the hydroxide is converted to carbonate electrolyte by exposure to a carbon dioxide atmosphere at a temperature above 100°C. This treatment can be carried out out-of-cell or in-cell and provides the resultant electrode with the desired carbonate constituent make-up.

In a further aspect of the invention, the hydroxide added to the electrode 1, in addition to providing the carbonate electrolyte upon heat treatment, also converts any ceramic oxides or hydroxides in the electrode to stabilizing components. In accordance with this aspect of the invention, ceramic oxides, such as, for example, alumina, zirconia, iron oxide, etc., may be added by any conventional process to the electrode subsequent to sintering, these oxides then being converted by the hydroxides to the desired stabilizing components. In this case, the amount of hydroxide added should be selected to be sufficient to convert the ceramic oxides, as well as to convert the hydroxide to the desired amount of carbonate electrolyte.

In preferred construction, the hydroxide added to the electrode contains lithium hydroxide for reacting with the ceramic oxides. For ceramic oxides such as, for example, $ZrO_2$, $Al_2O_3$ and $Fe_2O_3$ respective components $Li_2ZrO_3$, $LiAlO_2$ and $LiFeO_2$ having extremely high sintering resistance and stability are produced. These components, furthermore, fill the pores of the electrode and enhance the electrolyte storage and wicking properties. Preferably the added ceramic oxide includes $Al_2O_3$ or $Al(OH)_3$ so that the reaction with lithium hydroxide produces highly stable lithium aluminate.

The invention will be further illustrated by the following examples and tables.

Example 1

A nickel-cobalt anode for a fuel cell was impregnated with alkali hydroxides of Li-K composition similar to that of the electrolyte tile of the cell (identified as Cell 149 in Table 1 below). The amount of hydroxide was equivalent to filling approximately 10% of the electrode pore volume with carbonates. The conversion of hydroxides to carbonates was performed *in-cell* in the presence of $CO_2$ during the early cell heat up cycle. As can be seen from Table 1, the performance of the cell was 35 mV higher at 115 mA/cm$^2$ than that of a cell (identified as cell 151) assembled with similar components and no hydroxide treatment.

TABLE 1
Results of hydroxide (LiKOH) wetted anode
structures in fuel cells

| Cell No. | Hydroxide treatment | Performance at 115 mA/cm² (mV) | Comment |
|---|---|---|---|
| 149 | Yes | 860 | Improvement of 35 mv |
| 151 | No | 825 | |

Example 2

In this example, both hydroxide components and ceramic oxide components were added to nickel-based carbonate fuel cell anodes to provide carbonate electrolyte and stable sintering retardant constituents. The flow diagram of the procedure followed is shown in Figure 2 which also provides desirable porosity ranges for the initial and final anode structures and desirable weight gain ranges due to the addition of the hydroxide and ceramic oxide components. A total of four cells were assembled with the alkali hydroxide and aluminum hydroxide treatment.

The anodes were first electrochemically impregnated with $Al(OH)_3$. The amount of $Al(OH)_3$ was determined based upon a desired final electrode porosity. After impregnation, the electrodes were sprayed with an alkali hydroxide (Li-K-OH) solution in methanol. The reaction of lithium hydroxide with aluminum hydroxide produced lithium aluminate and the presence of carbon dioxide caused the conversion of the remainder of the alkali hydroxides to alkali carbonates.

Performance of the fuel cells assembled with these hydroxide-treated anodes are compared with cells assembled with untreated anodes in Table 2. All the cells treated with hydroxides displayed significantly better performance (40—75 mV higher at 115 mA/cm$^2$). Also, cell endurance with the stabilized anodes was better than that of cells assembled with conventional nickel anodes. This can be attributed to the sintering resistance imparted by lithium aluminate. An additional advantage is also derived from the fine particle structure of lithium aluminate formed in the electrode pores. This fine particle structure improves the capability of the cell to withstand high differential pressures across the fuel and oxidant chambers.

TABLE 2
Results of Al(OH)$_3$ impregnation followed by
hydroxide treatment in fuel cells

| Cell Nos. | Al(OH)$_3$ LiKOH treat-ment | Cell design | Performance at 115 mA/cm$^2$ mV | Comments |
|---|---|---|---|---|
| S7—7, 7—14, 7—18, 7—31 | No | Standard | 770—820 | Significant per-formance losses observed during first 300 hours of cell operation |
| 7—38 7—40 | Yes | Standard | 850—870 | 40—50 mV improve-ment and stable for 4000 hours |
| 7—35 | Yes | Nickel-cobalt anode | 880 | 60 mV improvement and stable for 750 hours (volun-tary termination) |
| IR7—1 | Yes | Nickel current collectors for anode | 895 | 75 mV improvement |

In all cases it is understood that the above-described arrangements are merely illustrative of the many possible specific embodiments which represent applications of the present invention.

## Claims

1. A method of fabricating an electrode for use in a molten carbonate fuel cell comprising:
incorporating an alkaline hydroxide into an electrode structure at room temperature;
heating the electrode structure carrying the hydroxide in the presence of carbon dioxide to convert the hydroxide to a carbonate constituent.

2. A method in accordance with Claim 1 wherein:
said incorporating is by impregnation.

3. A method in accordance with Claim 2 wherein:
said impregnation is by one of spraying, dipping and vacuum filtration.

4. A method in accordance with Claim 1 wherein said heating said electrode in the presence of carbon dioxide occurs subsequent to said electrode being incorporated into a fuel cell during heat-up of the cell.

5. A method in accordance with Claim 1 wherein said heating said electrode in the presence of carbon dioxide is effected at least at 100°C prior to said electrode being incorporated into a fuel cell.

6. A method in accordance with Claim 1 wherein:
said hydroxide is one of an alkali hydroxide and an alkaline earth hydroxide.

7. A method in accordance with Claim 6 wherein:
said hydroxide is one of lithium, potassium and sodium hydroxide.

8. A method in accordance with Claim 1 or 6 further comprising:
incorporating a ceramic oxide into said electrode prior to said heating.

9. A method in accordance with Claim 8 wherein:
said ceramic oxide incorporation is by impregnation.

10. A method in accordance with Claim 8 wherein:
said ceramic oxide incorporation is prior to said hydroxide incorporation.

11. A method in accordance with Claim 8 wherein:
said ceramic oxide is one of alumina, zirconia and iron oxide.

12. A method in accordance with Claim 8 wherein:
said hydroxide is lithium hydroxide.

13. A method in accordance with Claim 1 wherein:
the amount of hydroxide added is such that the resultant carbonate constituent fills about 5 to 85 percent of the electrode pore volume.

14. A method in accordance with Claim 1 wherein:
said alkaline hydroxide constituent comprises an alkali hydroxide and an alkaline earth hydroxide.

## Patentansprüche

1. Verfahren zur Herstellung einer Elektrode für eine Brennstoffzelle mit Carbonatschmelze als Elektrolyt, bei dem ein alkalisches Hydroxid bei Raumtemperatur in eine Elektrodenstruktur eingebracht und die das Hydroxid tragende Elektrodenstruktur in Gegenwart von Kohlendioxid erhitzt wird, um das Hydroxid in Carbonat umzuwandeln.

2. Verfahren nach Anspruch 1, bei dem die Einbringung durch Imprägnation erfolgt.

3. Verfahren nach Anspruch 2, bei dem die Imprägnation durch Aufsprühen, Tauchen oder durch Vakuumfiltration erfolgt.

4. Verfahren nach Anspruch 1, bei dem das Erhitzen der Elektrode in Gegenwart von Kohlendioxid anschliessend an die Einbringung der Elektrode in eine Brennstoffzelle während des Aufheizens der Zelle erfolgt.

5. Verfahren nach Anspruch 1, bei dem das Erhitzen der Elektroden in Gegenwart von Kohlendioxid bei mindestens 100°C erfolgt, bevor die Elektrode in eine Brennstoffzelle eingebracht wird.

6. Verfahren nach Anspruch 1, bei dem das Hydroxid Alkalihydroxid oder Erdalkalihydroxid ist.

7. Verfahren nach Anspruch 6, bei dem das Hydroxid Lithium-, Kalium- oder Natriumhydroxid ist.

8. Verfahren nach Anspruch 1 oder 6, bei dem ferner ein keramisches Oxid in die Elektrode vor dem Erhitzen eingebracht wird.

9. Verfahren nach Anspruch 8, bei dem das keramische Oxid durch Imprägnation eingebracht wird.

10. Verfahren nach Anspruch 8, bei dem das keramische Oxid eingebracht wird, bevor das Hydroxid eingebracht wird.

11. Verfahren nach Anspruch 8, bei dem das keramische Oxid Aluminiumoxid, Zirkondioxid oder Eisenoxid ist.

12. Verfahren nach Anspruch 8, bei dem das Hydroxid Lithiumhydroxid ist.

13. Verfahren nach Anspruch 1, bei dem eine solche Menge Hydroxid zugesetzt wird, dass das resultierende Carbonat etwa 5 bis 85% des Porenvolumens der Elektrode ausfüllt.

14. Verfahren nach Anspruch 1, bei dem das alkalische Hydroxid ein Alkalihydroxid und ein Erdalkalihydroxid enthält.

**Revendications**

1. Procédé de fabrication d'une électrode destinée à être utilisée dans une pile à combustible à base de carbonate fondu, dans lequel on incorpore, à la température ambiante, un hydroxyde alcalin dans une structure d'électrode; et dans lequel on chauffe la structure d'électrode comportant l'hydroxyde, en présence de bioxyde de carbone, afin de convertir l'hydroxyde en un constituant à base de carbonate.

2. Procédé selon la revendication 1, dans lequel l'incorporation est effectuée par imprégnation.

3. Procédé selon la revendication 2, dans lequel l'imprégnation est effectuée par pulvérisation, immersion ou filtration sous vide.

4. Procédé selon la revendication 1, dans lequel le chauffage de l'électrode en présence de bioxyde de carbone, est effectué après avoir incorporé l'électrode dans une pile à combustible, au cours du chauffage de la pile.

5. Procédé selon la revendication 1, dans lequel le chauffage de l'électrode, en présence de bioxyde de carbone, est effectué à une température d'au moins 100°C avant d'incorporer l'électrode dans une pile à combustible.

6. Procédé selon la revendication 1, dans lequel l'hydroxyde comprend un hydroxyde alcalin et un hydroxyde alcalino-terreux.

7. Procédé selon la revendication 6, dans lequel l'hydroxyde, est choisi parmi les hydroxydes de lithium, de potassium et de sodium.

8. Procédé selon la revendication 1 ou 6, dans lequel on incorpore en outre un oxyde céramique, dans l'électrode avant le chauffage.

9. Procédé selon la revendication 8, dans lequel l'oxyde céramique est incorporé par imprégnation.

10. Procédé selon la revendication 8, dans lequel l'oxyde céramique est incorporé avant l'incorporation de l'hydroxyde.

11. Procédé selon la revendication 8, dans lequel l'oxyde céramique est choisi parmi l'alumine, l'oxyde de zirconium et l'oxyde de fer.

12. Procédé selon la revendication 8, dans lequel l'hydroxyde est l'hydroxyde de lithium.

13. Procédé selon la revendication 1, dans lequel la quantité d'hydroxyde ajouté, est telle que le constituant résultant à base de carbonate, remplisse d'environ 5 à 85 pour cent du volume des pores de l'électrode.

14. Procédé selon la revendication 1, dans lequel le constituant à base d'hydroxyde alcalin, comprend un hydroxyde alcalin ainsi qu'un hydroxyde alcalino-terreux.

FIG. 1

FIG. 2